# EUROPEAN PATENT APPLICATION

(11) **EP 2 567 862 A2**
(43) Date of publication of application: **13.03.2013**
(21) Application number: 11777559.3
(22) Date of filing: 03.05.2011
(51) Int. Cl.: B60N 2/26, B60N 2/28

(54) **INFANT CAR SEAT**

(30) Priority: 02.05.2011 KR 20110003768 U; 07.03.2011 KR 20110001930 U; 02.03.2011 KR 20110001717 U; 01.09.2010 KR 20100085223 U; 03.05.2010 KR 20100004659 U
(71) Applicant: Kim, Tae Hyung, Busan 611-821 (KR)
(72) Inventor: Kim, Tae Hyung, Busan 611-821 (KR)
(74) Representative: Hocking, Adrian Niall
(86) International application number: PCT/KR2011/003317
(87) International publication number: WO 2011/139078

(57) **Abstract**

An infant car seat having a bathtub, which include a main body, which is fixed to a seat of a car and includes a seat back portion for sitting a child thereon; the bathtub, mounted on the seat back portion and includes a drain tube for draining water used for washing a child; a soil container for collecting the water drained via the drain tube; and a portable bidet device, including a warm water supply unit for washing a child in the bathtub and a warm air supply unit to dry the child after being washed, thus being very sanitary and convenient and after washing a child, a car can be washed by using the portable bidet device and a car wash brush that is included , thus being very useful.

## Description

### Technical Field

The present invention relates to an infant car seat including a bathtub.

### Background Art

An infant car seat is a small car seat for a child that includes a safety belt.

Korean Utility Model No. 1993-1444 discloses a child stroller which can be used as a bathtub and can also be used as an infant car seat when strapped to a seat of a car. However, the problem is, when the stroller is brought into the house to be used as a bathtub, it is necessary to wash casters of the stroller to remove soil on the casters. Furthermore, since a drain hole for draining water used for washing a child is made at the bottom of the stroller, when water used for washing a child who soiled a diaper is drained through the drain hole, the dirty water flows along the bottom surface of the stroller. As a result, the stroller is covered with germs, thus being insanitary.

### Disclosure of the Invention

The present invention provides an infant car seat including a sanitary and convenient bathtub.

### Technical Solution

The present invention provides a sanitary, convenient, and useful infant car seat which includes a bathtub with a drain tube, a soil container, and a bidet device for washing a child with warm water and drying the child.

The present invention also provides a sanitary, convenient, and more useful infant car seat which includes a bathtub with a drain tube, a soil container, a bidet device for washing a child with warm water and drying the child, a car wash brush which can be connected to the portable bidet device to wash a car, and an auxiliary seat back.

### Advantageous Effects

An infant car seat according to an embodiment of the present invention includes a bathtub having a drain tube, a soil container, and a bidet device. Therefore, after changing a diaper or washing a child, dirty water flows directly into the soil container, thus being very sanitary. Furthermore, after a child is washed with warm water from the bidet device, the child can be dried with warm air of the bidet device.

An infant car seat according to an embodiment of the present invention includes a bathtub with a drain tube, a soil container, a portable bidet device for washing a child with warm water and drying the child, a car wash brush which can be connected to the portable bidet device to wash a car, and an auxiliary seat back.

Therefore, after washing a child, a car can be washed by using the portable bidet device and the car wash brush.

### Brief Description of the Drawings

FIG. 1 is a perspective view of an infant car seat according to an embodiment of the present invention;
FIG. 2 is a diagram showing usage of the infant car seat of FIG. 1;
FIG. 3 is a perspective view of a portable bidet device according to another embodiment of the present invention;

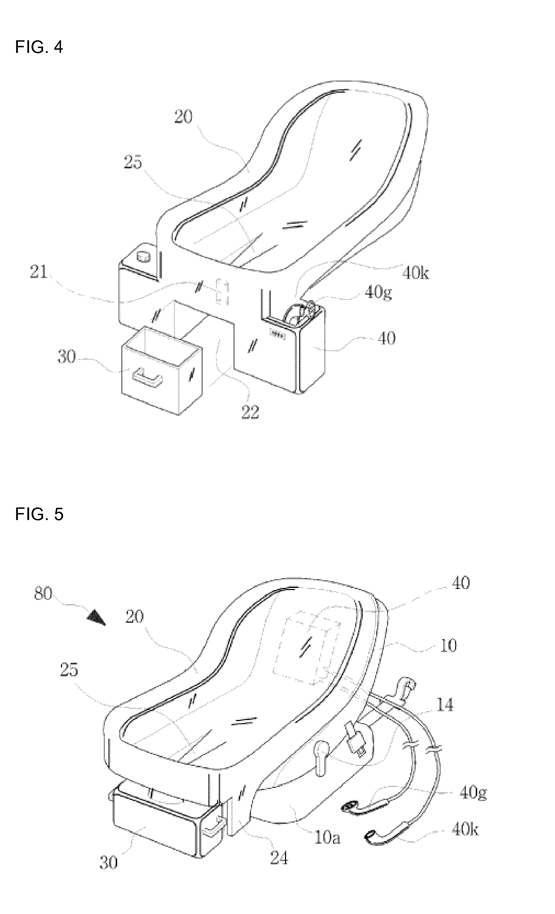

FIG. 4 is a perspective view of a bathtub according to another embodiment of the present invention;
FIG. 5 is a diagram showing that a bidet device is installed on the main body of the infant car seat;
FIG. 6 is a perspective view of an infant car seat according to an embodiment of the present invention;
FIG. 7 is a perspective view showing that an auxiliary seat back_and an infant carrier are fixed to the main body of FIG. 6;
FIG. 8 is a perspective view showing that an auxiliary seat back and a second auxiliary seat back are fixed to the main body of FIG. 6;
FIG. 9 is a perspective view showing usage of the infant car seat while the second auxiliary seat back is fixed to the main body of FIG. 6;
FIG. 10 is a perspective view showing usage of the infant car seat while only the seat back portion is used;
FIG. 11 is a perspective view of a warm water supply unit, a warm air supply unit, and a car wash water supply unit of a portable bidet device; and
FIG. 12 is a diagram showing a car wash brush is connected to the portable bidet device to wash a car.

### Best mode for carrying out the Invention

Hereinafter, the present invention will be described in detail by explaining preferred embodiments of the invention with reference to the attached drawings. However, it will be understood by those of ordinary skill in the art that various changes in form and details can be made therein without departing from the spirit and scope of the present invention as defined by the following claims

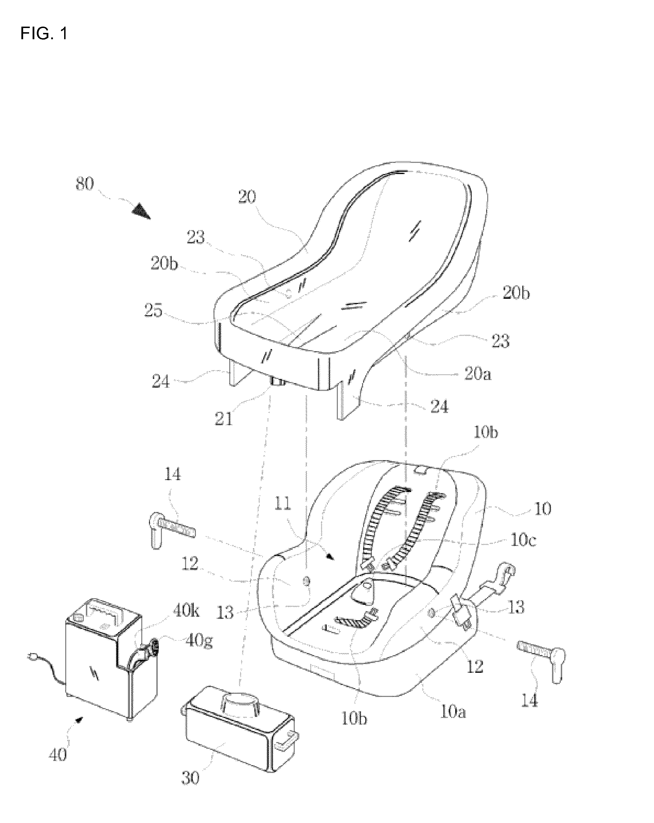

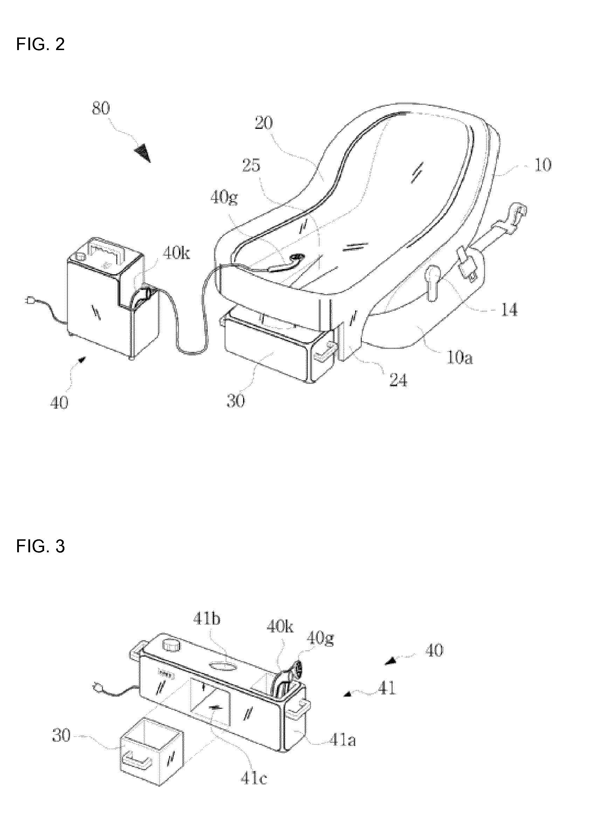

According to an embodiment of the present invention, as shown in FIGS. 1 and 2, an infant car seat 80 according to an embodiment of the present invention includes a main body 10, which is fixed to a seat of a car and includes a seat back portion 11 for sitting a child thereon, a bathtub 20, which is mounted on the seat back portion 11 and includes a drain tube 21 for draining water used for washing a child, a soil container 30 for collecting the water drained via the drain tube 21, and a bidet device 40, which includes a warm water supply unit for washing a child in the bathtub 20 and a warm air supply unit to dry the child after being washed.

According to another embodiment of the present invention, The bidet device 40 is a portable bidet 41 and as shown in FIG. 3 and include a soil entrance 41 b, in which dirty water enters from the drain tube 21 and which is formed at the top of a body 41 a, a storage space 41 c which is formed below the soil entrance 41 b and where the soil container 30 is accommodated.

According to another embodiment of the present invention, the bidet device 40 is installed on the bathtub 20, a storage space 22 is formed below the drain tube 21, and the soil container 30 is accommodated in the storage space 22.

According to another embodiment of the present invention, the bidet device 40 is installed on the main body 10.

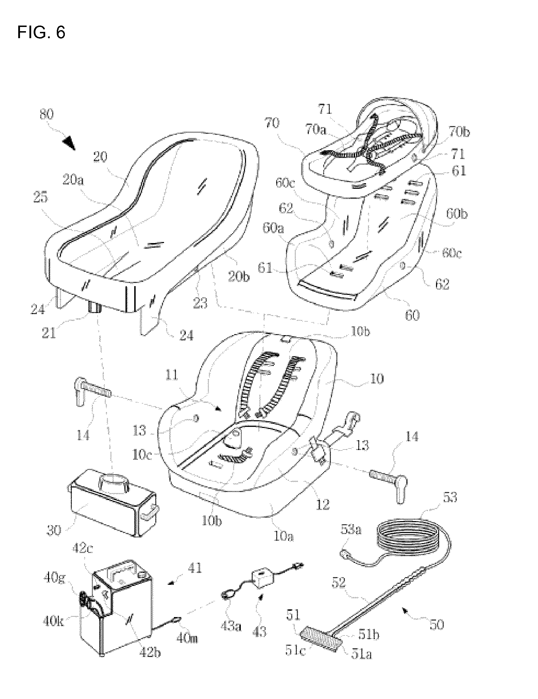

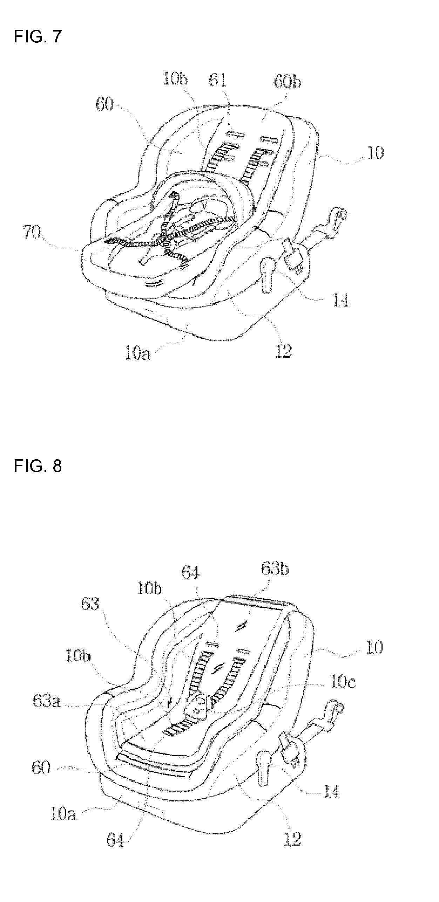

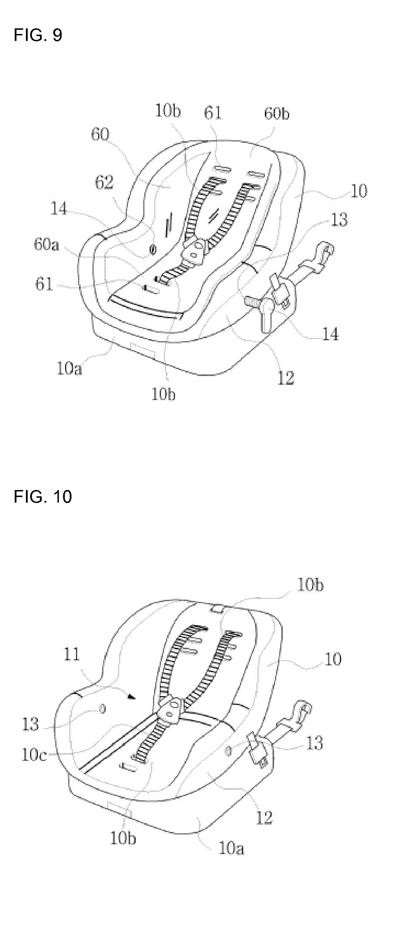

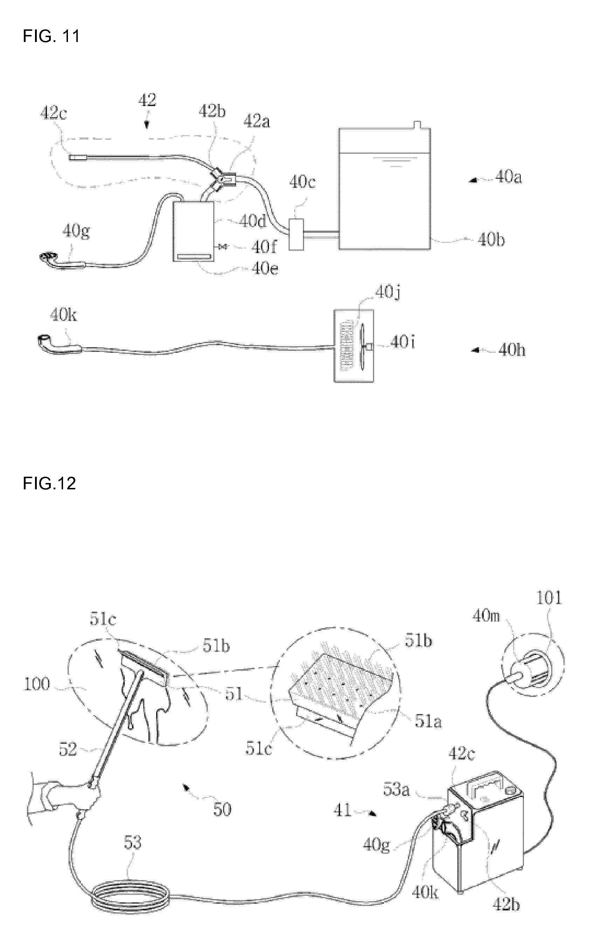

According to another embodiment of the present invention, as shown in FIGS. 6 through 12, the infant car seat 80 includes the main body 10, which is fixed to a seat of a car and includes the seat back portion 11 for sitting a child thereon, the bathtub 20, which is mounted on the seat back portion 11 and includes the drain tube 21 for draining water used for washing a child, the soil container 30 for collecting the water drained via the drain tube 21, a bidet device 40, which includes a warm water supply unit for washing a child in the bathtub 20, a warm air supply unit to dry the child after being washed, a car wash water supply unit 42 for washing a car, and a car wash brush 50 that is connected to the car wash water supply unit 42 for washing a car with water supplied by the car wash water supply unit 42, and an auxiliary seat back 60, which is accommodated in the seat back portion 11 and includes a seat portion 60a and a backrest portion 60b in which safety belt insertion holes 61 are formed.

According to another embodiment of the present invention, an attachment groove 23, in which screw threads are formed on an inner circumferential surface, is formed in each side 20b of the left and right sides of the bathtub 20, an attachment hole 13, in which screw threads is formed in each side 12 of the left and right sides of the main body 10, and the attachment grooves 23 and the attachment holes 13 are combined with each other by attachment screws 14.

According to another embodiment of the present invention, the edge of the bathtub 20 cover the edge of the seat back portion 11, a leg 24 is formed at each of the front portion of the left and right sides of the bathtub 20, the drain tube 21 is formed downward between the two legs 24, and a guiding groove 25 that is sloped toward an entrance of the drain tube 21 is formed in an inner bottom surface 20a of the bathtub 20.

According to another embodiment of the present invention, the auxiliary seat back 60 is made of a durable material, includes an attachment hole 62, in which screw threads are formed on an inner circumferential surface, is formed in each side 60c of the left and right sides of the auxiliary seat back 60, and includes an infant carrier 70 for carrying a child, which is mounted on the auxiliary seat back 60 and includes an attachment hole 71, in which screw threads are formed on the inner circumferential surface is formed in each side 70b of the left and right sides of the infant carrier 70. an attachment hole 13, in which screw threads are formed on the inner circumferential surface, is formed in each side 10b of the left and right sides of the main body 10. The attachment holes 62, 71, and 13 are combined with each other by the attachment screws 14.

According to another embodiment of the present invention, a second auxiliary seat back 63, which is mounted on the auxiliary seat back 60, is further provided, wherein insertion holes 64 for inserting the safety belt 10b therein are formed in a seat portion 63a and a backrest portion 63b.

According to another embodiment of the present invention, the car wash water supply unit 42 includes a switching valve 42a, which is connected to a pump 40c, which is connected to a water tank 40b via a hose, via a hose and is capable of switching directions of flow of water supplied thereto by using a knob 42b and a car wash nozzle 42c connected to the switching valve 42a via a hose. A nozzle 51 a, via which car wash water supplied from the car wash nozzle 42c is jetted, and a brush 51 b are arranged at a first end of the car wash brush 50, whereas a head portion 51, to which a glass-cleaning silicon is fixed, a knob pipe 52 connected to the head portion 51, and a hose 53, which is connected to the nozzle 51 a of the head portion 51 at a first end and is connected to the car wash nozzle 42c at a second end via a connecting cap 53a to supply car wash water thereto, are arranged at a second end of the car wash brush 50, wherein the portable bidet device 41 includes a power converter 43 for changing household power to DC power.

In detail, the portable bidet device 41 includes a carrying handle. In a warm water supply unit 40a, water supplied to a warm water tank 40d via the pump 40c connected to the water tank 40b is heated by a heater 40e arranged in the warm water tank 40d and is jetted from a shower head 40g via a hose. A warm air supply unit 40h is configured, such that air from a fan motor 401 and heated by an electric heater 40j is jetted by a warm air head 40k via a hose.

After a child is washed and a car is about to be washed, the connecting cap 53a of the car wash brush 50 is attached to the car wash nozzle 42c of the car wash water supply unit 42, the knob 42b of the switching valve 42a is operated, a connecting plug 40m is inserted to a cigarette lighter jack 101 of a car 100, and a power switch is turned on.

Although the bathtub 20 can contain sufficient water to give a full bath to a child, the soil container 30 cannot collect all of the water from the bathtub 20. Therefore, it is preferable to use the bathtub 20 with a relatively small amount of water for washing a child after changing a soiled diaper.

In the drawings, the unexplained reference numeral 10a denotes a base unit, the unexplained reference numeral 10c denotes a buckle for fixing the safety belt 10b, and the unexplained reference numeral 40f denotes a drain valve.

### Industrial Applicability

The present invention can be applied to an infant car seat including a bathtub.

## Claims

1. An infant car seat having a bathtub, the infant car seat comprising:
a main body, which is fixable to a seat of a car and includes a seat back portion for sitting a child thereon;
the bathtub, which is mountable on the seat back portion and includes a drain tube for draining water used for washing a child; and
a soil container for collecting the water drained via the drain tube.

2. An infant car seat having a bathtub, the infant car seat comprising:
a main body, which is fixable to a seat of a car and includes a seat back portion for sitting a child thereon;
the bathtub, which is mountable on the seat back portion and includes a drain tube for draining water used for washing a child;
a soil container for collecting the water drained via the drain tube; and
a bidet device, which includes a warm water supply unit for washing a child in the bathtub and a warm air supply unit to dry the child after being washed.

3. The infant car seat of claim 2, wherein the bidet device is a portable bidet device and comprises:
a soil entrance, in which dirty water enters from the drain tube and which is formed at the top of the body; and
a storage space formed below the soil entrance and where the soil container is accommodated.

4. The infant car seat of claim 2, wherein the bidet device is installed on the bathtub,
a storage space is formed below the drain tube, and
the soil container is accommodated in the storage space.

5. The infant car seat of claim 2, wherein the bidet device is installed on the main body.

6. The infant car seat of claim 2, wherein the bidet device is a portable bidet device and comprises;
a car wash water supply unit for washing a car; and
a car wash brush which is connected to the car wash water supply unit for washing a car with water supplied by the car wash water supply unit.

7. The infant car seat of claim 6, wherein the car wash water supply unit includes a switching valve, which is connected to a pump, which is connected to a water tank via a hose, via a hose and is capable of switching directions of flow of water supplied thereto by using a knob and a car wash nozzle connected to the switching valve via a hose,
a nozzle, via which car wash water supplied from the car wash nozzle is jetted, and a brush are arranged at a first end of the car wash brush,
a head portion, to which a glass-cleaning silicon is fixed, a knob pipe connected to the head portion, and a hose, which is connected to the nozzle of the head portion at a first end and is connected via a connecting cap to the car wash nozzle at a second end to supply car wash water thereto, which are arranged at a second end of the car wash brush, and
the portable bidet device includes a power converter for changing household power to DC power.

8. The infant car seat of claim 1 or claim 2, further comprising an auxiliary seat back, which is accommodated in the seat back portion and comprises a seat portion and a backrest portion,
wherein safety belt insertion holes are formed in the seat portion and the backrest portion.

9. An infant car seat with a bathtub, the infant car seat comprising:
a main body, which is fixable to a seat of a car and includes the seat back portion for sitting a child thereon;
the bathtub, which is mountable on the seat back portion and includes a drain tube for draining water used for washing a child;
a soil container for collecting the water drained via the drain tube;
a portable bidet device, which includes a warm water supply unit for washing a child in the bathtub, a warm air supply unit to dry the child after being washed, and a car wash water supply unit for washing a car, a car wash brush which is connected to the car wash water supply unit for washing a car with water supplied by the car wash water supply unit; and
an auxiliary seat back, which can be accommodated in the seat back portion and comprises a seat portion and a backrest portion,
wherein safety belt insertion holes are formed in the seat portion and the backrest portion.

10. The infant car seat of clam 1, claim 2, or claim 9 wherein an attachment groove, in which screw threads are formed on an inner circumferential surface, is formed in each side of the left and right sides of the bathtub,
an attachment hole, in which screw threads are formed on an inner circumferential surface, is formed in each side of the left and right sides of the main body, and
the attachment grooves and the attachment holes are combined with each other by attachment screws.

11. The infant car seat of claim1, claim2 or clam 9, wherein the edge of the bathtub cover the edge of the seat back portion,
a leg is formed at each of the front portion of the left and right sides of bathtub,
the drain tube is formed downward between the two legs, and
a guiding groove that is sloped toward an entrance of the drain tube is formed in an inner bottom surface of the bathtub.

12. The infant car seat of claim 9, wherein the auxiliary seat back is made of a durable material,
a first attachment hole, in which screw threads are formed on an inner circumferential surface, is formed in each side of the left and right sides of the auxiliary seat back,
the auxiliary seat back comprises an infant carrier for carrying a child, which is mounted on the auxiliary seat back,
a second attachment hole, in which screw threads are formed on an inner circumferential surface, is formed in each side of the left and right sides of the infant carrier,
a third attachment hole, in which screw threads are formed on an inner circumferential surface, is formed in each side of the left and right sides of the main body, and
the first, second, and third attachment holes are combined with each other by attachment screws.

13. The infant car seat of claim 9, further comprising a second auxiliary seat back , which is mounted on the auxiliary seat back,
wherein insertion holes for inserting a safety belt therein are formed in a seat portion and a backrest portion of the second auxiliary seat back.

14. The infant car seat of claim 9, wherein the car wash water supply unit includes a switching valve, which is connected to a pump, which is connected to a water tank via a hose, via a hose and is capable of switching directions of flow of water supplied thereto by using a knob and a car wash nozzle connected to the switching valve via a hose,
a nozzle, via which car wash water supplied from the car wash nozzle is jetted, and a brush are arranged at a first end of the car wash brush,
a head portion, to which a glass-cleaning silicon is fixed, a knob pipe connected to the head portion, and a hose, which is connected to the nozzle of the head portion at a first end and is connected via a connecting cap to the car wash nozzle at a second end to supply car wash water thereto, which are arranged at a second end of the car wash brush, and
the portable bidet device includes a power converter for changing household power to DC power.
